# EUROPÄISCHE PATENTSCHRIFT

(11) **EP 1 399 486 B1**
(45) Veröffentlichungstag und Bekanntmachung des Hinweises auf die Patenterteilung: **16.09.2009**
(21) Anmeldenummer: 02776491.9
(22) Anmeldetag: 29.05.2002
(51) Int. Cl.: C08B 30/04

(54) **VERFAHREN ZUR HERSTELLUNG VON STÄRKE ODER STÄRKEHALTIGEN PRODUKTEN AUS STÄRKEHALTIGEN PFLANZLICHEN ROHSTOFFEN**
METHOD FOR PRODUCING STARCH OR STARCH-CONTAINING PRODUCTS FROM STARCH-CONTAINING PLANT RAW MATERIALS
PROCEDE DE PRODUCTION D'AMIDON OU DE PRODUITS A BASE D'AMIDON, A PARTIR DE MATIERES PREMIERES VEGETALES CONTENANT DE L'AMIDON

(30) Priorität: 07.06.2001 AT 8882001
(43) Veröffentlichungstag der Anmeldung: 24.03.2004
(73) Patentinhaber: Südzucker Aktiengesellschaft Mannheim/Ochsenfurt, 68165 Mannheim (DE); Forschungszentrum Karlsruhe GmbH, 76133 Karlsruhe (DE)
(72) Erfinder: GRÜLL, Dietmar, A-3442 Langenschönbichl (AT); WITTENBERGER, Robert, A-3434 Katzelsdorf/Wienerwald (AT); WASTYN, Marnik, Michel, A-2320 Schwechat (AT); SCHULTHEIß, Christoph, 76327 Pfinztal-Berghausen (DE)
(74) Vertreter: Schwahn, Hartmut
(86) Internationale Anmeldenummer: PCT/AT2002/000162
(87) Internationale Veröffentlichungsnummer: WO 2002/098922

(56) Entgegenhaltungen:
- WO-A-99/64634
- FR-A- 2 239 524
- DATABASE CHEMABS [Online] CHEMICAL ABSTRACTS SERVICE, COLOMBUS, OHIO, US; 1973 HILLER ANDRZEJ: "Applicability of high-frequency electric field in the desinfection of wheat grain intended for food purposes" retrieved from STN Database accession no. 78:122830 XP002205382 & BROMATOL. CHEM. TOKSYKOL., Bd. 5, Nr. 4, - 1972 Seiten 491-504,
- DATABASE CHEMABS [Online] CHEMICAL ABSTRACT SERVICE, COLUMBUS, OHIO, US; 2001; ANGERSBACH ALEXANDER: "EFFECTS OF PULSED ELECTRIC FIELDS ON CELL MEMBRANES IN REAL FOOD SYSTEMS" retrieved from STN Database accession no. 136:339743 XP002205381 & INNOVATIVE FOOD SCIENCE & EMERGING TECHNOLOGIES, Bd. 1, Nr. 2, 1. Juni 2000 (2000-06-01), Seiten 135-149,

## Beschreibung

Die Erfindung betrifft ein Verfahren zur Herstellung von Stärke oder stärkehaltigen Produkten aus stärkehaltigen pflanzlichen Rohstoffen.

Bei der Gewinnung von Stärke aus pflanzlichen Rohstoffen muss die Stärke aus der pflanzlichen Zellmatrix befreit und von den anderen zellulären Bestandteilen getrennt bzw. isoliert werden. Dabei kommt es im großtechnologischen Maßstab immer zu Verunreinigungen der Stärke mit Proteinen, Lipiden oder (Mikro-)Fasern. Darüber hinaus befindet sich die Stärke in ihrer natürlichen Form in enger Wechselwirkung mit diversen Komponenten, wie z.B. Proteinen und Lipiden, die zum Teil an der Oberfläche des Stärkekorns fest assoziiert sind bzw. im Stärkekorn mehr oder weniger eng an die Stärkemoleküle gebunden sind. Derartige Verunreinigungen können bei der Verwendung der hergestellten Stärkeprodukte Probleme verursachen. Beispielsweise ist bekannt, dass Stärke im Lebensmittel- oder pharmazeutischen Bereich auf Grund derartiger Verunreinigungen farbliche, geschmackliche oder allergene Nachteile mit sich bringen kann. Weiters ist bekannt, dass Komplexe von Stärke mit Proteinen und Lipiden in der Papierindustrie, beispielsweise bei der Oberflächenbehandlung von Papier, Nachteile verursachen und z.B. dadurch Ablagerungen verursacht werden, wodurch die "runnability" einer Papiermaschine beeinträchtigt wird. Weiters kann durch derartige Reststoffe die Papierqualität, insbesondere die Weiße von Papieren, beeinträchtigt werden. Auch im Textilbereich sind für viele Verwendungen auf herkömmlichem, industriellem Weg hergestellte Stärken nachteilig, da sie nur begrenzt filtrierbar sind bzw. durch Ablagerungen oder Verstopfungen zu einem erhöhten Serviceeinsatz führen.

In der FR 2 239 524 A wird ein Stärkeprodukt aus Getreide sowie ein Verfahren zur Herstellung derselben beschrieben, wobei die Korngrößenseparation im Vordergrund steht. Aus diesem granulometrischen Verfahren werden Produkte zweier Korngrößen erhalten, wobei die Feinfraktion in der Mehlherstellung und die Grobfraktion für beschichtetes Papier verwendet wird. Die Separation gemäß der FR 2 239 524 A wird in zwei Hydrozyklonen durchgeführt, wobei gewaschene Weizenstärke in einer Suspension definierter Viskosität in den ersten Zyklon eingebracht wird. Der zweite Hydrozyklon wird mit der Bodenfracht des ersten Zyklons beschickt, um Material größerer Dichte weiter zu trennen. Dabei wird die Viskosität schonend angepasst, so dass die gewünschte Grobfraktion erhalten wird. Das erhaltene Granulat wird durch Zugabe von Chemikalien, wie Formaldehyd, Epichlorhydrin oder Natriumhypochlorid, einerseits zwecks Vernetzung der Stärke zur Gelatierung und andererseits zwecks Aufoxidierung modifiziert.

Augersbach et al. (Inn.Food Sci. & Em.Techn.1(2) (2000), 135-149) beschreiben die Anwendung eines elektrischen Feldes auf Zellmembranen in der Ernähungswissenschaft. Hiller (Bronnatel.Chem.Toksykol. 5(4) (1972), 491-501) beschreibt die Nutzung von elektrischen Feldern zur Ungezieferbekämpfung bei Weizenkörner.

Es ist daher Aufgabe der vorliegenden Erfindung, ein industriell anwendbares Verfahren zur Verfügung zu stellen, mit welchem hochreine Stärke hergestellt werden kann, welche auch in heiklen Einsatzgebieten, bedingt durch einen geringen Verunreinigungsgrad an Lipiden, Proteinen, DNA, (Mikro-)Fasern, Stärketaschen, etc., eingesetzt werden kann.

Diese Aufgabe wird erfindungsgemäß durch ein Verfahren zur Herstellung von Stärke, Biostärke oder stärkehaltigen Produkten aus stärkehaltigen pflanzlichen Rohstoffen, welches dadurch gekennzeichnet ist, dass die Herstellung ein Elektroimpulsverfahren umfasst, gelöst.

Die Anwendung von Elektroimpulsverfahren im Bereich der Nahrungsmittelindustrie oder für das Aufbrechen von pflanzlichen Rohstoffen allgemein, ist seit langem Stand der Technik (siehe beispielsweise "Trends in Food Science & Technology" 5 (3) (1994), Seiten 71-75). Dabei wurde dieses Verfahren vor allem zur Herstellung von Fruchtsäften aus Karotten, Äpfeln und dgl. oder zur Verhinderung von Mikroorganismen-Wachstum (Food Technology 5 (1992), Seiten 124-133) verwendet. Weitere Verwendungen betrafen die Präparation von niedrigmolekularen Verbindungen aus Pflanzenzellen, bei welchen die verbesserte Zellsaftextraktion aus diesen Zellen nach einer derartigen Behandlung ausgenutzt wurde. Beispiele derartiger Verbindungen sind Amaranthin aus Chenopodium rubrum (Trends in Food Science & Technology, 5 (3) (1994), Seiten 70-99) oder Saccharose aus Zuckerrüben (WO 99/64634 A). Bei anderen Verbindungen brachte allerdings dieses Verfahren nicht den gewünschten Effekt (Trends in Food Science & Technology, 5 (3) (1994), Seiten 71-75). Es wurde auch vorgeschlagen, wasserlösliche intrazelluläre Produkte nach einem Fermentationsprozess unter Beibehaltung der Lebensfähigkeit der Zellen durch schonende Elektroimpulsverfahren zu extrahieren (Appl. Microbiol. Biotechnol. 27 (1988), S. 561-566).

Überraschenderweise konnte mit der vorliegenden Erfindung gezeigt werden, dass sich das Elektroimpulsverfahren auch dazu eignet, hochkomplexe und polymere Substanzen, wie Stärke aus pflanzlichen Zellen, effizient zu extrahieren, wobei das Elektroimpulsverfahren bei der Gewinnung der Stärke den enormen Vorteil gezeigt hat, dass sich damit auch innige Kontakte von Proteinen, aber auch Lipiden und Nukleinsäuren, zu den Stärkepolymeren in einer Weise destabilisieren lassen, so dass diese in den herkömmlichen industriellen down-stream-Verfahren bei der Stärkeherstellung in viel effizienterer Weise abgereichert und gereinigt werden können.

Damit sind industriell hergestellte Stärken mit deutlich reduziertem Gehalt an Proteinen, aber auch mit reduziertem Gehalt an Lipiden, Mikrofaserstoffen und anderen Verunreinigungen, wie DNA, Farbstoffen usw., erhältlich. Bevorzugterweise wird das erfindungsgemäße Verfahren vor allem unter Verwendung von Kartoffeln oder Getreide, insbesondere Mais, Wachsmais oder Weizen, als pflanzliche Rohstoffe, durchgeführt, bringt aber grundsätzlich erhebliche Vorteile bei der Verwendung zur Gewinnung bzw. Verwendung aller bekannten Knollen- und Getreidestärken. Vor allem bei Mais liegt - wegen des hohen Lipidgehaltes der Maiskeimlinge - ein besonders hoher Grad an Verunreinigungen bzw. Verunreinigungspotential mit Lipiden vor, welches mit dem Verfahren gemäß der vorliegenden Erfindung erfolgreich hintangehalten werden kann. Darüberhinaus ist der natürliche Gehalt an Lipiden in den Getreidestärken hoch und kann durch Verwendung des Verfahrens deutlich verbessert werden.

Ein Problem bei der Anwendung von Stärke, wie z.B. in der Papier-industrie, bilden sogenannte "Stärketaschen", welche nicht aufgeschlossene Zellverbände darstellen und üblicherweise eine Größe von 50 µm bis 200 µm aufweisen und, wie erwähnt, zu Agglomerationen und Ablagerungen führen, die bislang als unvermeidbar angesehen wurden. Überraschenderweise zeigt sich, dass, wenn die stärkehaltigen pflanzlichen Rohstoffe erfindungsgemäß mit Elektroimpulsverfahren behandelt worden sind, das resultierende Stärkeprodukt absolut frei an derartigen Stärketaschen ist bzw. der Gehalt an Stärketaschen auf ein Niveau reduziert werden kann, welches selbst in heiklen Anwendungsbereichen nicht zu den beschriebenen Nachteilen führt.

Durch die verbesserte Proteinabtrennung, die sich auf Grund der Behandlung mit dem Elektroimpulsverfahren ergibt, können sowohl stärkebindende Proteine im Rahmen von üblichen down-stream-Prozessen besser entfernt, als auch Enzymaktivitäten verhindert werden, die zur Herabsetzung der Qualität der Stärke führen. Hierbei ist vor allem die Hemmung von Oxidoreduktasen zu nennen, da diese Enzyme in Stärken zu Verfärbungen führen können. So können beispielsweise durch das Elektroimpulsverfahren Phenoloxidasen bei der Verarbeitung von Kartoffeln effizient inaktiviert werden. Der Zusatz von So, oder anderer Inhibitoren dieser Enzymaktivitäten kann dadurch erheblich reduziert werden bzw. vollkommen vermieden werden.

Es hat sich erfindungsgemäß gezeigt, dass bedingt durch das Elektroimpulsverfahren eine bessere Abtrennbarkeit zwischen Stärke und Eiweiß bereits im Primärseparator effizient ausgenutzt werden kann, da die Stärkemilch (Unterlauf) einen wesentlich geringeren Eiweißgehalt aufweist als mit Nicht-Elektroimpulsverfahren behandelten Ausgangsmaterialien. Bedingt durch diese verbesserte Abtrennbarkeit des Eiweißes kann einerseits eine deutlich bessere Stärkerohmilchqualität erzeugt werden, andererseits kann der Eiweißgehalt der Kleberfraktion signifikant erhöht werden.

Es zeigt sich auch, dass z.B. durch die Änderung der Zellwandfestigkeit eine geringere Faserbildung bei der Verreibung bzw. Zerkleinerung der Rohstoffe erfolgt, die freigesetzte Stärke daher leichter in der Hydrozyklonanlage raffiniert werden kann, und damit eine höhere Reinheit der Stärke, insbesondere der Feinstärke, entsteht.

Dazu kommt noch, dass durch den an sich bekannten Mikroorganismen hemmenden Effekt des Elektroimpulsverfahrens auch eine reduzierte mikrobiologische Belastung des pflanzlichen Materials während des Herstellungsprozesses einhergeht. Somit kann der Zusatz von Bioziden und sonstiger antimikrobieller Mitteln, insbesondere ein Zusatz von SO₂, vermieden oder zumindest verringert werden. Durch den Einsatz des Elektroimpulsverfahrens im Herstellungsprozess von Stärke kann die mikrobiologische Belastung der Endprodukte deutlich reduziert werden, und dadurch häufig zusätzliche Prozessschritte zur Hemmung oder Reduzierung des mikrobiologischen Befalles im Prozess bzw. der Endprodukte vermieden werden. So ist z.B. eine zusätzliche Herabsetzung des pH-Wertes der Rohstärkemilch auf etwa 3,5 mit SO₂ oder mineralischen Säuren vor bzw. während der Raffination der Stärke nicht mehr notwendig. Häufig wird die mikrobiologische Belastung der Endprodukte durch eine oxidative Behandlung verbessert. Da diese Behandlungen die Qualität der Stärke durch z.B. säurehydrolytischen oder oxidativen Abbau beeintrachtigen kann (z.B. durch Reduktion der Viskosität der Stärke), werden durch den Einsatz des Elektroimpulsverfahrens nicht nur mikrobiologisch einwandfreie sondern auch hochqualitative Produkte hergestellt.

Bei der Herstellung von Biostärken muss auf jeglichen Chemikalieneinsatz verzichtet werden. Somit dürfen z.B. bei der Quellung von Biomais kein SO₂ und keine anorganischen Säuren zugesetzt, bei der Verreibung von Biokartoffeln keine Chemikalien zur Hemmung der qualitätsbeeinträchtigenden Enzymaktivitäten verwendet sowie keine Maßnahmen zur Kontrolle der Mikrobiologie im Prozess und der Endprodukte gesetzt werden. Somit erreichen diese Produkte häufig nicht die Reinheit und Qualität der sonst handelsüblichen Produkte. Durch den Einsatz des Elektroimpulsverfahrens können trotz vollkommener Vermeidung eines SO₂-Zusatzes erstmals auch wirkliche Biostärken von hoher Qualität und Reinheit hergestellt werden. Vor allem ist es erfindungsgemäß auch möglich, erstmals Biomaisstärke bzw. Biowachsmaisstärke mit deutlich verbesserter Qualität und Reinheit herzustellen.

Der geringere Einsatz von Bioziden bzw. SO₂ sowie der antimikrobielle Effekt des Elektroimpulsverfahrens ermöglichen auch längere Betriebszeiten in der Stärkefabrik bei gleichbleibend guter Qualität der Endprodukte. Die Reinigungsintervalle können somit verlängert werden. Dies gilt insbesondere bei der Gewinnung von Biostärken, deren Produktion sonst nur in kurzen Einheiten möglich ist. Somit ist durch den Einsatz des Elektroimpulsverfahrens nicht nur in qualitativer sondern auch in ökonomischer Hinsicht eine Optimierung der Herstellung von Biostärken, insbesondere Biogetreidestärken, möglich.

Das Elektroimpulsverfahren kann im Rahmen der vorliegenden Erfindung durchaus mit den für andere Aufgaben (z.B. WO 99/64634) beschriebenen Parametern erfolgen. Bevorzugterweise wird demgemäß das Elektroimpulsverfahren bei einer Feldstärke von 0,1 bis 50 kv/cm, vorzugsweise bei 0,5 bis 20 kV/cm, insbesondere von 1 bis 10 kV/cm, durchgeführt. Die Impulsfrequenz kann bevorzugterweise bei 1 bis 2000 Impulsen pro Sekunde, mehr bevorzugt von 5 bis 1000 Impulsen pro Sekunde, insbesondere 5 bis 100 Impulsen pro Sekunde durchgeführt werden.

Es ist auch bekannt (siehe WO 99/64634), dass unter Verwendung des Elektroimpulsverfahrens das Ausschlussverfahren für pflanzliche Rohstoffe zu einer Energiereduktion führt. Daher wird das Elektroimpulsverfahren erfindungsgemäß bevorzugt mit einem Energieeinsatz von 1 bis 100 kJ/kg Rohstoff, vorzugsweise 2 bis 75 kJ/kg, insbesondere von 5 bis 50 kJ/kg, durchgeführt.

Bevorzugterweise wird der pflanzliche Rohstoff dem Elektroimpulsverfahren bereits im Ganzen oder in zerkleinerter Form unterworfen. Daher kann erfindungsgemäß bevorzugt ein Zerkleinerungsschritt dem Elektroimpulsverfahren vorangestellt werden. Bevorzugterweise werden daher dem Elektroimpulsverfahren ganze Kartoffeln, Kartoffelstücke, Kartoffelabfälle aus der kartoffelverarbeitenden Industrie, Kartoffelreibsel, Mais-, Wachsmaismaische, Weizen und andere Getreidearten unterworfen. Gerade Kartoffel und auch Weizen können in unzerkleinerter Form industriell eingesetzt werden. Ein weiterer bevorzugter Aspekt der Erfindung ist die Behandlung von Mais- und Wachsmaisbruch vor der Vermahlung. In einer besonders bevorzugten Variante der Erfindung wird dieser Bruch von dem Keimling befreit und getrennt, und somit der entkeimte Bruch behandelt. Eine weitere bevorzugte Variante der Erfindung ist die Behandlung von Kartoffelpülpe, Getreidefasern und Stärkerohmilch, wobei die Behandlung der Stärkemilch an den verschiedensten Stufen ihrer Raffination erfolgen kann, d.h. von dem Entstehen der Rohmilch nach der Verreibung bzw. Vermahlung bis zum raffinierten Stärkeslurry bzw. aufkonzentrierten Stärkefeuchtkuchen, bevor dieser getrocknet wird. Eine weitere Variante der Erfindung liegt in der Behandlung von trockenen Stärkeprodukten, in dem diese in Wasser aufgerührt werden und mit dem Elektroimpulsverfahren behandelt werden.

Vorzugsweise kann auch die Quellung des pflanzlichen Rohstoffes verkürzt und der Einsatz von SO₂ verringert werden, insbesondere, wenn von einem Getreiderohstoff, wie z.B. Mais oder Wachsmais, ausgegangen wird. Üblicherweise wird dieser Quelllösung Schwefeldioxid in Konzentrationen von 0,1 bis 0,3 % zugesetzt (siehe G. Tegge, "Stärke und Stärkederivate" (1984), Seiten 79-125, insbesondere Seite 118). Erfindungsgemäß können dafür aber auch Quelllösungen, die weniger als 0,1 % Schwefeldioxid, vorzugsweise weniger als 0,01 % Schwefeldioxid, insbesondere Schwefeldioxidfreie Lösungen verwendet werden. Die zuletzt erwähnte Verfahrensvariante ist von besonderer Bedeutung bei der Quellung von biologisch angebauten Rohstoffen, wie z.B. Biomais und Biowachsmais. Mit dem erfindungsgemäßen Verfahren können aber für sämtliche Stärken (z.B. auch aus Kartoffeln) Biostärken hergestellt werden, weil die Herstellung ohne Zugabe von SO₂ oder Bioziden erfolgen kann.

Gemäß einem weiteren Aspekt betrifft die vorliegende Erfindung auch ein Stärkeprodukt, welches nach einem Verfahren gemäß der vorliegenden Erfindung erhältlich ist. Die erfindungsgemäß erhältliche Stärke unterscheidet sich maßgebend von bisher im Stand der Technik produzierten (industriellen) Stärken, insbesondere was ihren Gehalt an verunreinigungen bzw. Begleitstoffen, wie z.B. Proteinen anbelangt. So weisen erfindungsgemäße Stärkeprodukte bevorzugterweise einen Proteingehalt von unter 0,05 % in Trockensubstanz (TS) auf, während der Proteingehalt von nicht mit dem Elektroimpulsverfahren behandelten Stärken je nach pflanzlichem Rohstoff über diesen Werten liegt. So weisen Nicht-Elektroimpuls-behandelte Stärken aus Mais einen Proteingehalt von 0,2 bis 0,4 % in TS und einen Lipidgehalt von 0,5 bis 0,9 % in TS auf, Kartoffelstärken einen Proteingehalt von 0,05 bis 0,2 % in TS und einen Lipidgehalt von 0 bis 0,2 % in TS und Weizenstärken einen Proteingehalt von 0,1 bis 0,6 % in TS und einen Lipidgehalt von 0,7 bis 1,2 % in TS (vgl. Critical Rep. on Appl. Chemistry. 14 (1987), Galliard; Wiley & Sons).

Erfindungsgemäß erhältliche Elektroimpuls-behandelte Stärken weisen demgegenüber deutlich reduzierte Gehalte im Hinblick auf Lipide, Proteine und DNA, auf. Beispielsweise kann erfindungsgemäß eine Maisstärke hergestellt werden, die einen Proteingehalt von unter 0,2 % in TS und gegebenenfalls einen Lipidgehalt von unter 0,5 % in TS aufweist. Es können Kartoffelstärken hergestellt werden, die einen Proteingehalt von unter 0,05 % in TS aufweisen, sowie Weizenstärken, die einen Proteingehalt von unter 0,1 % in TS und gegebenenfalls einen Lipidgehalt von unter 0,7 % in TS aufweisen. Eine besonders bevorzugte Stärke gemäß der vorliegenden Erfindung weist daher weniger als 10 ml, insbesondere weniger als 5 ml, Sediment pro 50 g Stärke auf (siehe Bestimmungsmethode bei Eiweißfällungstest in den Beispielen).

Wie erwähnt, weisen die erfindungsgemäß erhältlichen Stärkeprodukte auch einen deutlich reduzierten Gehalt an Fasern, die auch Stärketaschen beinhalten, auf. Diese werden durch Absieben eines wässrigen Stärkeslurries über ein 50 µm-Sieb bestimmt. Der Gehalt an Fasern und Stärketaschen, z.B. der Maisstärke, reduziert sich von durchschnittlich 0,1 % auf unter 0,01 % bezogen auf Trockensubstanz (siehe Bestimmung des Feinfasergehaltes in den Beispielen).

Generell sind erfindungsgemäß daher Stärkeprodukte erhältlich, die einen gegenüber herkömmlichen, nicht durch Elektroimpulsverfahren hergestellten Stärken, um zumindest 50 %, vorzugsweise um zumindest 80 %, insbesondere um zumindest 95 %, verringerten Gehalt an Stärketaschen aufweisen.

Erfindungsgemäß können demgemäß weißere Stärkeprodukte, vor allem weißere Biostärken, erhalten werden. Auch ist erfindungsgemäß eine bessere Entwässerung der Fasern zur Herstellung von Futtermitteln möglich und dadurch eine geringere Trocknungsenergie notwendig. Wegen der geänderten Wechselwirkung zwischen Stärke und Eiweiß ist auch eine leichtere Raffination der Stärke in der Hydrozyklonanlage möglich. Ebenso lassen sich die Feinfasern und restliches Eiweiß in der Hydrozyklonanlage leichter entfernen, was sich in einem verringerten Protein- und Fasergehalt niederschlägt.

Die erfindungsgemäß hergestellte Stärke zeigt nicht nur eine deutliche Reduktion der Begleitstoffe sondern dadurch bedingt auch eine verbesserte Derivatisierbarkeit durch höhere Reaktionsausbeute, kürzere Reaktionszeiten, reduziertem Chemikalieneinsatz, geringere Nebenproduktbildung und Abwasserfrachten. Die Herstellung von Stärkederivaten, wie z.B. Carboxymethylstärke (CMS), propoxylierten Stärken, vernetzten Stärken oder abgebauten Stärken (thermisch, thermochemisch oder enzymatisch), ist dadurch nicht nur erleichtert, sondern ermöglicht die Herstellung von qualitativ verbesserten Produkten. So führen Begleitstoffe der Stärke, wie z.B. Eiweiß, bei der Führung von Reaktionen unter alkalischen Bedingungen bei erhöhten Temperaturen, wie es z.B. bei der Carboxymethylierung von Stärke der Fall ist, zu Maillard-Nebenreaktionen, die eine Vergilbung des Endproduktes bewirken. Diese Verfärbung wirkt sich in der Anwendung der Stärke häufig nachteilig aus. Der Einsatz von Stärke mit reduzierten Begleitstoffen ermöglicht die Produktion von derivatisierten Stärken mit deutlich verbesserter Farbe. Bevorzugter Weise wird daher im Rahmen des erfindungsgemäßen Verfahrens die Stärke derivatisiert und/oder physikalisch modifiziert und damit ein derivatisiertes und/oder physikalisch modifiziertes Produkt zur Verfügung gestellt.

Derartige erfindungsgemäß hergestellte Stärken, Biostärken bzw. daraus abgeleitete Stärkederivate sind vor allem in heiklen und anspruchsvolleren Einsatzbereichen bevorzugt einsetzbar, so beispielsweise im Lebensmittel-, Kosmetik- und pharmazeutischen Bereich, bei der Papierherstellung bzw. Papieroberflächenbehandlung, im Klebstoffbereich und im Textilbereich, insbesondere als Druckverdicker.

Gemäß einem weiteren Aspekt betrifft daher die vorliegende Erfindung die Verwendung eines erfindungsgemäß hergestellten Stärkeproduktes als Lebensmittelzusatz, als Komponente bzw. Hilfsmittel bei der Herstellung von kosmetischen (z.B. in Salben, Pudern, Duschgels, als Verdicker, Emulgierungshilfsmittel, Bestäubungsmittel von Präservativen etc.) und pharmazeutischen Präparaten, wie z.B. Tablettierungshilfsmittel, Tablettensprengmittel, Plasmaexpander, sowie bei pharmazeutisch einsetzbaren Gebrauchsgegenständen, wie z.B. Bestäubungsmittel für Handschuhe etc., als Mittel zur Oberflächenbehandlung von Papier, wie z.B. als Oberflächenleim oder Bindemittel für Streichfarben, als Zusatzstoff bei der Papierherstellung, als Klebstoff wie z.B. Tapetenkleister, Zigarettenleim, sowie als Druckverdicker im Textilbereich. Selbstverständlich können aber die erfindungsgemäß hergestellten Stärkeprodukte für alle anderen Zwecke, die für Stärke beschrieben sind, eingesetzt werden.

Im Lebensmittelbereich bietet die erfindungsgemäße hochreine Stärke vor allem Vorteile hinsichtlich ihrer Farbe, ihres Geschmacks und ihres geringen Allergenanteils (sowohl auf Proteinals auch auf DNA-Niveau). Diese Vorteile sind besonders ausgeprägt bei den Biostärken und ihren physikalisch modifizierten Derivaten.

Bei der Oberflächenbehandlung von Papier zeigt die erfindungsgemäße hochreine Stärke eine deutlich verbesserte "runnability" der Papiermaschine, eine geringere Schaumneigung im Leimkreislauf, reduzierte Ablagerungsbildung auf den Walzen und im Leimbehälter, und reduzierte Amylosekristallisationsneigung (vor allem bei Getreidestärke, wie z.B. Maisstärke). Bedingt durch den höheren Weißegrad der erfindungsgemäßen Stärkeprodukte, insbesondere bei Maisstärken und Derivaten, ist auch die erzeugte Papierqualität, insbesondere im Hinblick auf die Weiße, deutlich verbessert. Auch beim Einsatz in der Papiermasse kommt es selbst bei höheren Einsatzmengen (mehr als 0,5 % pro Papier) zu keinem negativen Einfluss auf die Weiße von hochqualitativen Papieren.

Auch im Textilbereich, vor allem als Druckverdicker, weisen die erfindungsgemäß hergestellten Stärken einen enormen Vorteil hinsichtlich ihrer verbesserten Filtrierbarkeit auf. Das Bedrucken von Textilien erfolgt üblicherweise mit Hilfe von Schablonen mit sehr geringen Maschenweiten. Eine wesentliche Anforderung an die Stärkederivate, die als Verdicker für Druckpasten u.a. eingesetzt werden, ist eine hohe Reinheit bzw. Filtrierbarkeit (siehe Bestimmungsmethode der Filtrierbarkeit von Druckverdicker in den Beispielen). Hier sind es vor allem die Stärketaschen und sonstige Stärkebegleitstoffe, die normalerweise die Einsatzfähigkeit solcher Stärken einschränkt. Erfindungsgemäß können aber Stärken mit einer Filtrierbarkeit > 600 g alkalisch, bzw. 300 g sauer, zur Verfügung gestellt werden. Diese Qualitätsanforderungen ermöglichen erst die industrielle Anwendung im Druckverdicker, so dass es in der Praxis nicht zum Verschließen der Drucksiebe kommt (> 600 g alkalisch bedeutet hierbei, dass 600 g Stärke-TS als 8 oder 10%ige Kleister problemlos über eine 32 µm Metallgaze filtrierbar sind, > 300 g im sauren Bereich bedeutet, dass 300 g Stärke-TS als Kleister unter Zusatz von Zitronensäure ebenfalls problemlos über 32 µm filtrierbar sind).

Die Erfindung wird an Hand der nachfolgenden Beispiele sowie der zeichnungsfiguren näher erläutert.

Es zeigen:
**Fig. 1****:** Maisstärke mit Stärketaschen, ohne EIV-(Elektroimpulsverfahren)-Behandlung;
**Fig. 2****:** Maisstärke (einzelne Maiskörner), nach EIV-Behandlung, erfindungsgemäß; und
**Fig. 3****:** das Ergebnis eines Eiweiß-Fällungstests von unbehandelter (Fig. 3A) und behandelter (Fig. 3B) Maisstärke.

### Beispiele :

### Beispiel 1: Erfindungsgemäße Herstellung von Stärkeprodukten unter Verwendung des Elektroimpulsverfahrens (EIV)

Für die EIV-Behandlung ganzer Kartoffeln, Kartoffelreibsel, Maismaische, Weizen und Stärkeslurries müssen je nach erwünschtem Bearbeitungsziel verschiedene Parameter gewählt werden. Die wichtigsten Parameter sind die elektrische Feldstärke, die Zahl (und auch Länge) der elektrischen Impulse und die eingebrachte spezifische Energie.

Die spezifische Energie ist insofern ein wichtiger Parameter, als dieser Wert direkt mit einer z.B. durch Wärmebehandlung eingebrachten Energie gegenübergestellt werden kann. Die Höhe der elektrischen Feldstärke richtet sich nach der Art der durch die Behandlung zu zerstörenden Zellen. Um pflanzliche Zellen aufzuschließen, wird tendenziell weniger Energie benötigt als zum Aufschluss von Mikroorganismen.

Ab dem Bereich von 20 kV/cm ist aber die Gefahr einer starken Erwärmung bis zur Pyrolyse durch Plasmabildung gegeben. Außerdem erhöht sich die aufgewendete Energie, wodurch die Wirtschaftlichkeit des EIV im Vergleich zu herkömmlichen Aufschlussverfahren in Frage gestellt werden kann.

**Tabelle 1:**

| Parameter EIV | Anwendung | bevorzugter Bereich |
|---|---|---|
| Elektrische Feldstärke: | Verbesserung der Protein- und Lipidabtrennung und der Stärkeausbeute, Zerstörung der Stärketaschen | 0,1-50 kV /cm |
| Elektrische Feldstärke: | Mikroorganismen | 15-60 kV/cm |
| Impuls-Frequenz (Anzahl): | allgemein | 1-1500/s |
| Energie bezüglich Einsatzmenge: | allgemein | 2-75 kJ/kg |

### Beispiel 2: Untersuchung der Protein- und Lipidgehalte von Mais-, Kartoffel- und Weizenstärke

Die Auswirkungen der Elektroimpulsbehandlung auf drei verschiedene Stärketypen zeigen sich deutlich in einer Verringerung der Protein- und Lipidgehalte. Die so behandelten Stärken zeigen eine Verbesserung der anwendungstechnischen Eigenschaften.

**Tabelle 2: Protein- und Lipidgehalte von handelsüblichen Stärken ohne und mit EIV-Behandlung**

| | Wassergehalt [%] | Unbehandelt* [%] in TS | | EIV-behandelt [%] in TS | |
|---|---|---|---|---|---|
| | | Proteingehalt | Lipidgehalt | Proteingehalt | Lipidgehalt |
| Mais | 11-14 | 0,2-0,4 | 0,5-0,9 | 0,05-0,2 | 0,1-0,5 |
| Kartoffel | 12-17 | 0,05-0,2 | 0-0,2 | 0,01-0,05 | 0 |
| Weizen | 11-14 | 0,1-0,6 | 0,7-1,2 | 0,05-0,2 | 0,3-0,7 |

| | | | | | |
|---|---|---|---|---|---|
| *Quelle: Starch: properties and potential (Critical Rep. on Appl. Chemistry, 14, Galliard, Wiley & Sons (1987). | | | | | |

### Beispiel 3 : Mikroskopische Untersuchungen

Vor dem Mikroskopieren wird von der Stärke eine ca. 5%ige wässrige Suspension hergestellt und auf einen Objektträger aufgetragen. Die Bilder wurden mit dem Mikroskop bei 200facher Vergrößerung mit einer Digitalkamera aufgenommen.

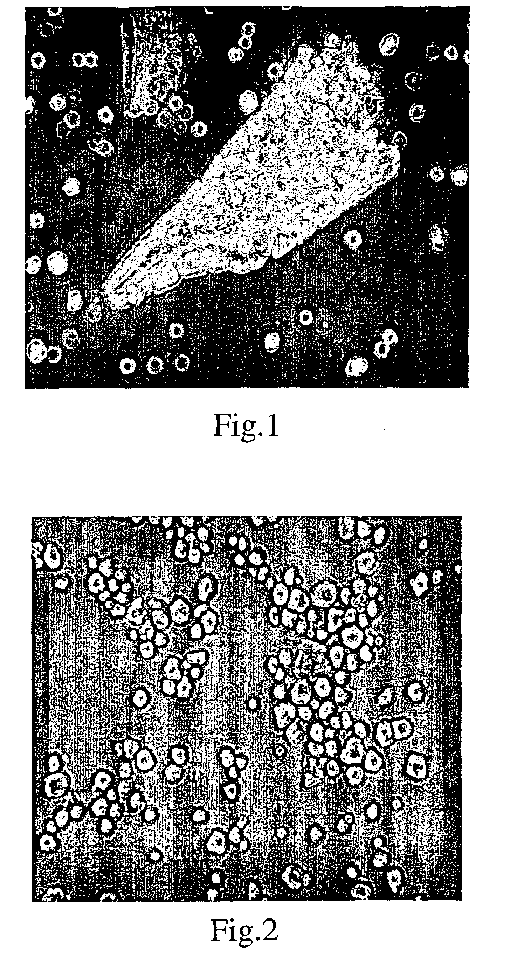

Fig. 1 zeigt das typische Bild einer sogenannten Stärketasche, die meist eine Größe von 50 µm bis 200 µm aufweisen. Diese sind durch die Behandlung mit dem EIV leicht zu zerstören. In Fig. 2 sieht man eine so behandelte Probe, die keine Stärketaschen mehr aufzeigt. Die scharfkantigen abgegrenzten Gebilde stellen einzelne Stärkekörner dar.

Ergebnis: Die Auflösung dieser Stärketaschen wirkt sich positiv auf anwendungstechnische Eigenschaften, wie z.B. die Filtrierbarkeit der Stärkekleister aus.

### Beispiel 4 : Eiweißfällungstest

Dieser Test zur Untersuchung der Qualität von Maisstärke, die mit Hilfe von Hochspannungs-Elektroimpulsen gewonnen wurde, ist vor allem ein Maß für die Reinheit der erfindungsgemäß hergestellten Stärke und zeigt die Einsatzfähigkeit z.B. in der Oberflächenbehandlung von Papier.

Durchführung: 50 g Stärke werden in ein Becherglas eingewogen und mit 450 g entionisiertem Wasser aufgerührt. Die Stärkesuspension wird mit 3 ml einer kommerziellen α-Amylase (z.B. Opitherm von Fa. Solvay) versetzt, unter Rühren im Ölbad auf 100°C erhitzt und 5 Minuten bei dieser Temperatur gehalten. Anschließend wird das Becherglas aus dem Ölbad genommen und der enzymatisch abgebaute Stärkekleister in einen Imhoff-Trichter umgefüllt. Der Stärkekleister wird nun 24 Stunden bei Raumtemperatur stehen gelassen. Anschließend wird die sedimentierte Menge abgelesen (ml).

| | kommerzielle Maisstärke | behandelte Maisstärke |
|---|---|---|
| Sedimentierte Menge | 10 ml | 2 ml |

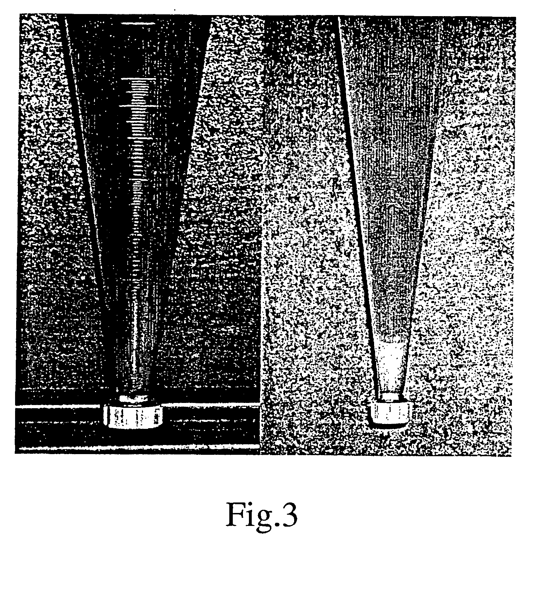

Zur besseren Darstellung siehe Fig. 3A und 3B.

Beurteilung: Die behandelte Stärke weist nach dem enzymatischen Abbau eine deutlich geringere Menge an Sediment auf. Dieses Sediment besteht im Wesentlichen aus Eiweiß, Fetten und Fasern. Je geringer die Stärkebegleitstoffe und somit je geringer das Sediment, umso günstiger der Einsatz in der Papierindustrie, z.B. in der Behandlung der Papieroberfläche (geringere bzw. keine Schaumneigung des abgebauten Leims, geringere bzw. keine Belagsbildung auf den Walzen, geringere Neigung zur RAPS-(Retrograded Amylose Particles)-Bildung, verbesserte "runnability" der Papiermaschine und letztendlich Verbesserung der erzeugten Papierqualität.

### Beispiel 5 : Bestimmung des Feinfasergehaltes

Dieser Test dient der Bestimmung des Feinfasergehaltes von Stärken wie z.B. Maisstärke, die mit Hilfe von Hochspannungs-Elektroimpulsen gewonnen wurde.

Durchführung: 50 g Stärke werden in ein Becherglas eingewogen und mit 200 g entionisiertem Wasser aufgerührt. Die Stärkesuspension wird 10 min im Ultraschallbad zur Auflösung von Agglomeraten behandelt und anschließend über ein getrocknetes, tariertes 50 µm-Sieb gegeben. Zur Entfernung anhaftender Stärkekörner wird intensiv mit Leitungswasser nachgewaschen. Das Sieb wird anschließend 45 min bei 120°C im Trockenschrank getrocknet und ausgewogen.

| | kommerzielle Maisstärke | behandelte Maisstärke |
|---|---|---|
| Feinfasern >50µm [%] in TS | 0,1 | 0,01 |

### Beispiel 6 : Bestimmung der Filtrierbarkeit

Dieser Test dient der Bestimmung der Filtrierbarkeit von Stärkederivaten, die als Verdicker für den Textildruck eingesetzt werden und ist ein Maß für die Reinheit und Eignung des Druckverdickers.

Durchführung: In 6900 g weichem Wasser werden 600 g Druckverdicker eingestreut und 5 min bei 3000 Upm mittels Propellerrührer gerührt. Der Kleister wird 1 Stunde bei Raumtemperatur quellen gelassen und anschließend kurz mit der Hand aufgerührt. Der so hergestellte Kleister wird nun bei Raumtemperatur über eine 32 µm Metallgaze bei einem definierten Unterdruck von 0,5 bar solange filtriert. Die Filtration wird bei Verstopfung der Gaze beendet. Die filtrierte Menge an Kleister wird abgewogen und die Menge an filtrierter Stärke rückgerechnet. Handelsübliche Druckverdicker zeigen Filtrierbarkeiten im Bereich von 300 bis 600 g. Ausgezeichnete Produkte haben Filtrierbarkeiten oberhalb von 600 g. Produkte mit Filtrierbarkeiten unterhalb von 300 g sind für den Textildruck ungeeignet.

| | kommerzielle Druckverdicker | Druckverdicker auf Basis von behandelter Maisstärke |
|---|---|---|
| Filtrierbarkeit über 32 µm | 350 g | > 600 g |

## Patentansprüche

1. Verfahren zur Herstellung,von Stärke, Biostärke oder stärkehaltigen Produkten aus stärkehaltigen pflanzlichen Rohstoffen, **dadurch gekennzeichnet, dass** die Herstellung ein Elektroimpulsverfahren umfasst.

2. Verfahren nach Anspruch 1, **dadurch gekennzeichnet, dass** Kartoffeln oder Getreide, insbesondere Mais, Wachsmais und Weizen, als pflanzliche Rohstoffe eingesetzt werden.

3. Verfahren nach Anspruch 1 oder 2, **dadurch gekennzeichnet, dass** das Elektroimpulsverfahren bei einer Feldstärke von 0,1 bis 50 kV/cm, vorzugsweise von 0,5 bis 20 kV/cm, insbesondere von 1 bis 10 kV/cm, durchgeführt wird.

4. Verfahren nach einem der Ansprüche 1 bis 3, **dadurch gekennzeichnet, dass** das Elektroimpulsverfahren mit einer Impulsfrequenz von 1 bis 2000 Impulsen pro Sekunde, vorzugsweise von 5 bis 1000 Impulsen pro Sekunde, insbesondere 5 bis 100 Impulsen pro Sekunde, durchgeführt wird.

5. Verfahren nach einem der Ansprüche 1 bis 4, **dadurch gekennzeichnet, dass** das Elektroimpulsverfahren mit einem Energieeinsatz von 1 bis 100 kJ/kg Rohstoff, vorzugsweise von 2 bis 75 kJ/kg, insbesondere 5 bis 50 kJ/kg, durchgeführt wird.

6. Verfahren nach einem der Ansprüche 1 bis 5, **dadurch gekennzeichnet, dass** der pflanzliche Rohstoff dem Elektroimpulsverfahren in zerkleinerter Form unterworfen wird.

7. Verfahren nach einem der Ansprüche 1 bis 6, **dadurch gekennzeichnet, dass** der pflanzliche Rohstoff, der dem Elektroimpulsverfahren unterworfen wird, ausgewählt ist aus ganzen Kartoffeln, Kartoffelreibsel, Mais- oder Wachsmaismaische, Weizen und Stärkeslurries.

8. Verfahren nach einem der Ansprüche 1 bis 7, **dadurch gekennzeichnet, dass** eine Quellung des Rohstoffes, insbesondere eines Mais-Rohstoffes, in einer Quelllösung durchgeführt wird, die weniger als 0,1 % Schwefeldioxid, vorzugsweise weniger als 0,01 % Schwefeldioxid, insbesondere kein Schwefeldioxid, enthält.

9. Verfahren nach einem der Ansprüche 1 bis 8, **dadurch gekennzeichnet, dass** die Herstellung ohne Zugabe von SO₂- und/oder Bioziden erfolgt.

10. Verfahren nach einem der Ansprüche 1 bis 9, **dadurch gekennzeichnet, dass** die Stärke derivatisiert und/oder physikalisch modifiziert wird.

11. Stärkeprodukt, **dadurch gekennzeichnet, dass** es einen Proteingehalt von unter 0,05 % in Trockensubstanz (TS) aufweist.

12. Stärkeprodukt nach Anspruch 11, **dadurch gekennzeichnet, dass** es gemäß einem Verfahren nach einem der Ansprüche 1 bis 10 erhältlich ist.

13. Stärkeprodukt, **dadurch gekennzeichnet, dass** es Maisstärke umfasst und einen Proteingehalt von unter 0,2 % in TS und gegebenenfalls einen Lipidgehalt von unter 0,5 % in TS aufweist.

14. Stärkeprodukt, **dadurch gekennzeichnet, dass** es Kartoffelstärke umfasst und einen Proteingehalt von 0,01 bis 0,05 % in TS aufweist.

15. Stärkeprodukt, **dadurch gekennzeichnet, dass** es Weizenstärke umfasst und einen Proteingehalt von unter 0,1 % in TS und gegebenenfalls einen Lipidgehalt von unter 0,7 % in TS aufweist.

16. Stärkeprodukt nach einem der Ansprüche 11 bis 15, **dadurch gekennzeichnet, dass** die Stärke weniger als 10 ml, insbesondere weniger als 5 ml, Sediment pro 50 g Stärke aufweist.

17. Stärkeprodukt nach einem der Ansprüche 11 bis 16, **dadurch gekennzeichnet, dass** es einen gegenüber herkömmlichen, nicht durch
Elektroimpulsverfahren hergestellten Stärken um zumindest 50 %, vorzugsweise um zumindest 80 %, insbesondere um zumindest 95 %, verringerten Gehalt an Stärketaschen aufweist.

18. Stärkeprodukt nach einem der Ansprüche 11 bis 17, **dadurch gekennzeichnet, dass** die Stärke eine derivatisierte und/oder physikalisch modifizierte Stärke ist.

19. Verwendung eines Stärkeproduktes nach einem der Ansprüche 11 bis 18, insbesondere von Biostärken, als Lebensmittelzusatz.

20. Verwendung eines Stärkeproduktes nach einem der Ansprüche 11 bis 18 zur Oberflächenbehandlung von Papier.

21. Verwendung eines Stärkeproduktes nach einem der Ansprüche 11 bis 18 im Textilbereich, insbesondere als Druckverdicker.

22. Verwendung eines Stärkeproduktes nach einem der Ansprüche 11 bis 18 als Zusatzstoff in der Papiermasse.

23. Verwendung eines Stärkeproduktes nach einem der Ansprüche 11 bis 18, insbesondere von Biostärken, zur Herstellung eines pharmazeutischen Präparates oder eines pharmazeutisch einsetzbaren Gebrauchsgegenstandes.

24. Verwendung eines Stärkeproduktes nach einem der Ansprüche 11 bis 18, insbesondere von Biostärken, im kosmetischen Bereich.

## Claims

1. A method for the production of starch, organic starch or starch-containing products from starch-containing plant raw materials, **characterized in that** the production comprises an electric pulse method.

2. The method according to claim 1, **characterized in that** potatoes or cereals, in particular maize, waxy maize and wheat are being used as the plant raw materials.

3. The method according to claim 1 or 2, **characterized in that** the electric pulse method is carried out at a field strength from 0.1 to 50 kV/cm, preferably from 0.5 to 20 kV/cm, most preferably from 1 to 10 kV/cm.

4. The method according to any one of claims 1 to 3, **characterized in that** the electric pulse method is carried out with a pulse frequency from 1 to 2000 pulses per second, preferably from 5 to 1000 pulses per second, most preferably from 5 to 100 pulses per second.

5. The method according to any one of claims 1 to 4, **characterized in that** the electric pulse method is carried out with an energy input from 1 to 100 kJ/kg _ raw material, preferably from 2 to 75 kJ/kg raw material, most preferably from 5 to 50 kJ/kg raw material.

6. The method according to any one of claims 1 to 5, **characterized in that** the plant raw material is subjected to the electric pulse method in broken form.

7. The method according to any one of claims 1 to 6, **characterized in that** the plant raw material subjected to the electric pulse method is selected from whole potatoes, potato grindings, maize mash or waxy maize mash, wheat and starch slurries.

8. The method according to any one of claims 1 to 7, **characterized in that** a swelling of the plant raw materials, in particular of a maize raw material, is carried out in a swelling solution containing less than 0.1 % sulfur dioxide, preferably less than 0.01 % sulfur dioxide, most preferably in a swelling solution containing no sulfur dioxide.

9. The method according to any one of claims 1 to 8, **characterized in that** the production is carried out without the addition of SO₂ and/or biocides.

10. The method according to any one of claims 1 to 9, **characterized in that** the starch is being derivatized and/or physically modified.

11. A starch product **characterized in that** it has a protein content below 0.05% in dry substance (DS).

12. A starch product according to claim 11, **characterized in that** it can be obtained via a method according to any of claims 1 to 10.

13. A starch product **characterized in that** it comprises maize starch and has a protein content below 0.2% in DS and, as the case may be, a lipid content below 0.5% in DS.

14. A starch product **characterized in that** it comprises potato starch and has a protein content from 0.01 to 0.05% in DS.

15. A starch product **characterized in that** it comprises wheat starch and has a protein content-below 0.-1 % in DS and, as the case may be, a lipid content below 0.7% in DS.

16. The starch product according to any of claims 11 to 15, **characterized in that** the starch has less than 10 ml, in particular less than 5 ml, of sediment per 50 g of starch.

17. The starch product according to any of claims 11 to 16, **characterized in that** it has a starch pouch content reduced by at least 50%, preferably by at least 80%, most preferably by at least 95%, when compared to conventional starches not prepared by the electric pulse method.

18. Starch product according to any of claims 11 to 17, **characterized in that** the starch is a derivatized and/or physically modified starch.

19. Use of a starch product according to any of claims 11 to 18, in particular organic starches, as a food additive.

20. Use of a starch product according to any of claims 11 to 18 for the treatment of a surface of paper.

21. Use of a starch product according to any of claims 11 to 18 in the textile industry, in particular as a printing thickener.

22. Use of a starch product according to any of claims 11 to 18 as additive in the paper mass.

23. Use of a starch product according to any of claims 11 to 18, in particular organic starches, for the preparation of a pharmaceutical compound or a pharmaceutically applicable article.

24. Use of a starch product according to any of claims 11 to 18, in particular organic starches, in the cosmetic industry.

## Revendications

1. Procédé de production d'amidon, d'amidon bio ou de produits à base d'amidon à partir de matières premières végétales contenant de l'amidon, **caractérisé en ce que** la production comprend un procédé par impulsions électriques.

2. Procédé selon la revendication 1, **caractérisé en ce que** des pommes de terre ou des céréales, en particulier du maïs, du maïs cireux et du blé, sont utilisées en tant que matières premières végétales.

3. Procédé selon la revendication 1 ou 2, **caractérisé en ce que** le procédé par impulsions électriques est mis en oeuvre à une intensité de champ de 0,1 à 50 kV/cm, de préférence de 0,5 à 20 kV/cm, en particulier de 1 à 10 kV/cm.

4. Procédé selon l'une des revendications 1 à 3, **caractérisé en ce que** le procédé par impulsions électriques est mis en oeuvre avec une fréquence d'impulsions de 1 à 2000 impulsions par seconde, de préférence de 5 à 1000 impulsions par seconde, en particulier de 5 à 100 impulsions par seconde.

5. Procédé selon l'une des revendications 1 à 4, **caractérisé en ce que** le procédé par impulsions électriques est mis en oeuvre avec une utilisation d'énergie de 1 à 100 kJ/kg de matière première, de préférence de 2 à 75 kJ/kg, en particulier de 5 à 50 kJ/kg.

6. Procédé selon l'une des revendications 1 à 5, **caractérisé en ce que** la matière première végétale est soumise au procédé par impulsions électriques sous forme broyée.

7. Procédé selon l'une des revendications 1 à 6, **caractérisé en ce que** la matière première végétale qui est soumise au procédé par impulsions électriques est choisie parmi des pommes de terre entières, des pommes de terre râpées, de la trempe de maïs ou de maïs cireux, du blé et des suspensions d'amidon.

8. Procédé selon l'une des revendications 1 à 7, **caractérisé en ce qu'**un gonflement de la matière première, en particulier d'une matière première de maïs, est effectué dans une solution de gonflement qui contient moins de 0,1 % de dioxyde de soufre, de préférence moins de 0,01 % de dioxyde de soufre, en particulier ne contient pas de dioxyde de soufre.

9. Procédé selon l'une des revendications 1 à 8, **caractérisé en ce que** la production est effectuée sans addition de SO₂ et/ou biocides.

10. Procédé selon l'une des revendications 1 à 9, **caractérisé en ce que** l'amidon est dérivatisé et/ou physiquement modifié.

11. Produit d'amidon, **caractérisé en ce qu'**il présente une teneur en protéines de moins de 0,05 % dans la matière sèche (MS).

12. Produit d'amidon selon la revendication 11, **caractérisé en ce qu'**il peut être obtenu suivant un procédé selon l'une des revendications 1 à 10.

13. Produit d'amidon, **caractérisé en ce qu'**il comprend de l'amidon de maïs et présente une teneur en protéines de moins de 0,2 % dans la MS et éventuellement une teneur en lipides de moins de 0,5 % dans la MS.

14. Produit d'amidon, **caractérisé en ce qu'**il comprend de l'amidon de pommes de terre et présente une teneur en protéines de 0,01 à 0,05 % dans la MS.

15. Produit d'amidon, **caractérisé en ce qu'**il comprend de l'amidon de blé et présente une teneur en protéines de moins de 0,1 % dans la MS et éventuellement une teneur en lipides de moins de 0,7 % dans la MS.

16. Produit d'amidon selon l'une des revendications 11 à 15, **caractérisé en ce que** l'amidon présente moins de 10 ml, en particulier moins de 5 ml, de sédiment par 50 g d'amidon.

17. Produit d'amidon selon l'une des revendications 11 à 16, **caractérisé en ce qu'**il présente, par rapport aux amidons traditionnels non produits par procédé par impulsions électriques, une teneur en poches d'amidon réduite d'au moins 50 %, de préférence d'au moins 80 %, en particulier d'au moins 95 %.

18. Produit d'amidon selon l'une des revendications 11 à 17, **caractérisé en ce que** l'amidon est un amidon dérivatisé et/ou physiquement modifié.

19. Utilisation d'un produit d'amidon selon l'une des revendications 11 à 18, en particulier d'amidons bio, en tant qu'additif de produits alimentaires.

20. Utilisation d'un produit d'amidon selon l'une des revendications 11 à 18 pour le traitement de surface du papier.

21. Utilisation d'un produit d'amidon selon l'une des revendications 11 à 18 dans le domaine textile, en particulier en tant qu'épaississant d'impression.

22. Utilisation d'un produit d'amidon selon l'une des revendications 11 à 18 en tant qu'additif dans la pâte à papier.

23. Utilisation d'un produit d'amidon selon l'une des revendications 11 à 18, en particulier d'amidons bio, pour la production d'une préparation pharmaceutique ou d'un objet utilitaire utilisable en pharmacie.

24. Utilisation d'un produit d'amidon selon l'une des revendications 11 à 18, en particulier d'amidons bio, dans le domaine cosmétique.
